# EUROPÄISCHE PATENTSCHRIFT

(11) **EP 2 467 118 B1**
(45) Veröffentlichungstag und Bekanntmachung des Hinweises auf die Patenterteilung: **29.10.2014**
(21) Anmeldenummer: 10747148.4
(22) Anmeldetag: 17.08.2010
(51) Int. Cl.: A61J 11/02, A61J 11/04, A61J 9/04

(54) **SAUGNIPPELEINHEIT**
NIPPLE UNIT
UNITÉ TÉTINE

(30) Priorität: 20.08.2009 CH 12922009
(43) Veröffentlichungstag der Anmeldung: 27.06.2012
(73) Patentinhaber: Medela Holding AG, 6340 Baar (CH)
(72) Erfinder: PFENNIGER, Erich, CH-6030 Ebikon (CH); RIGERT, Mario, CH-6033 Buchrain (CH)
(74) Vertreter: Clerc, Natalia
(86) Internationale Anmeldenummer: PCT/CH2010/000198
(87) Internationale Veröffentlichungsnummer: WO 2011/020203

(56) Entgegenhaltungen:
- DE-C1- 10 157 071
- DE-U1-202007 016 416
- NL-C2- 1 005 120
- US-A1- 2006 169 694

## Beschreibung

### TECHNISCHES GEBIET

Die vorliegende Erfindung betrifft eine Saugnippeleinheit gemäss Oberbegriff des Patentanspruchs 1.

### STAND DER TECHNIK

Säuglinge, welche nicht an der Mutterbrust ernährt werden, trinken üblicherweise aus einer mit einem Saugnippel versehenen Flasche.

Üblicherweise ist die Flasche hart ausgebildet. D.h. sie verformt sich während des Saugens nicht und sie lässt sich auch nicht mit üblichen Kräften von Hand zusammendrücken. Während des Saugens muss somit Luft in die Flasche eindringen können. Dies wird üblicherweise dadurch erreicht, dass der Gewindering, mit welchem der Saugnippel auf der Flasche befestigt ist, gegenüber dem Flaschenhals nicht vollständig dichtet. Ist der Gewindering zu fest auf dem Flaschenhals aufgedreht, so kann zu wenig Luft in die Flasche strömen, und das Baby muss sich beim Saugen zu stark anstrengen. Ist der Gewindering jedoch zu lose auf dem Flaschenhals aufgebracht, so tropft Milch aus dem Gewindering aus der Flasche heraus.

In DE 23 41 762 wird vorgeschlagen, die Saugöffnung des Saugnippels mit einem Rückschlagventil und den Befestigungsflansch des Saugnippels mit einem Luftventil zu versehen. Das Luftventil ist durch ein zweistufiges Loch und durch einen u- oder v-förmigen Membranabschnitt mit einem x- oder y- förmigen Schnitt gebildet.

WO 2007/137440 offenbart eine Saugnippeleinheit mit einem Saugnippel und einem formstabilen Aufnahmekopf zur Aufnahme des Saugnippels. Der einstückig ausgebildete Aufnahmekopf ist mit einem Gewindering versehen, so dass er auf einen Flaschenhals einer Babyflasche oder einer Trinktasse geschraubt werden kann. Der Saugnippel ist auf dem halbkugelförmigen Aufnahmekopf aufgesteckt und nicht mit dem Gewindering befestigt. Der Saugnippel weist eine Belüftungsdichtlippe auf, welche eine Belüftungsöffnung im Aufnahmekopf verschliessen und freigeben kann.

US 2008/0237176, US 2 529 794, US 2 516 084, US 2 084 099, US 4 730 744, US 5 499 729 sowie US 4 865 207 offenbaren Saugflaschen mit Saugnippeln, wobei die Saugflaschen an ihrem dem Saugnippel abgewandten Ende mit einer Lufteinlassvorrichtung versehen sind.

US 2 745 568 zeigt eine Saugnippeleinheit mit einem Rückschlagventil und einem zweiten Ventil. Flüssigkeit, welche sich im Saugnippel angesammelt hat, kann durch dieses zweite Ventil in die Flasche zurückfliessen.

DE10157071 offenbart ebenfalls eine Saugnippeleinheit.

### DARSTELLUNG DER ERFINDUNG

Es ist eine Aufgabe der Erfindung, eine Saugnippeleinheit zu schaffen, welche eine optimale Belüftung während des Saugens ermöglicht.

Diese Aufgabe löst eine Saugnippeleinheit mit den Merkmalen des Anspruchs 1.

Die erfindungsgemässe Saugnippeleinheit weist einen Saugnippel, eine Befestigungsvorrichtung zur Befestigung des Saugnippels auf einem Flüssigkeitsbehälter und ein Belüftungsventil auf, wobei die Befestigungsvorrichtung ein erstes und ein zweites Befestigungsteil aufweist und wobei das Belüftungsventil mindestens ein erstes und ein zweites Ventilteil umfasst. Erfindungsgemäss ist das erste Ventilteil im ersten Befestigungsteil und das zweite Ventilteil im zweiten und/oder im ersten Befestigungsteil angeordnet. Das Belüftungsventil öffnet und verschliesst sich gegenüber dem zweiten Befestigungsteil.

Vorzugsweise ist das Belüftungsventil ein Membranventil und das erste Ventilteil ist eine Ventilmembran. Vorzugsweise ist das zweite Ventilteil eine Verschlussfläche, welche eine in der Membran angeordnete oder von der Membran freigegebene Öffnung verschliesst.

Durch die Verwendung eines derart angeordneten und ausgebildeten Belüftungsventils erfolgt die Belüftung des Flüssigkeitsbehälters in einem relativ engen vorgegebenen Rahmen. Der Unterdruck im Flüssigkeitsbehälter übersteigt einen vorgegebenen Unterdruck betragsmässig nicht. Vorzugsweise öffnet sich das Ventil ungefähr bei einer Druckdifferenz zwischen Behälter und Umgebungsdruck von circa 30 mmHg. Das Belüftungsventil arbeitet bei relativ geringen Druckunterschieden zwischen Innendruck der Flasche und angelegtem äusseren Saugdruck zuverlässig. Das Belüftungsventil arbeitet fast unabhängig davon, wie fest die Verbindung zwischen Saugnippeleinheit und Flüssigkeitsbehälter ist. Dadurch können die Benützer der Saugnippeleinheit, d.h. die Eltern oder Säuglingsbetreuer, keinen wesentlichen Einfluss auf die Funktionsweise des Belüftungsventils ausüben. Zum einen sind so Fehlbedienungen ausgeschlossen. Zum anderen ist gewährleistet, dass verschiedene Saugnippeleinheiten des gleichen Typs innerhalb einer relativ engen Bandbreite gleich reagieren bzw. funktionieren und das Baby beim Wechseln von einer Saugnippeleinheit auf eine andere Saugnippeleinheit des gleichen Typs somit keine Veränderung bemerkt.

Ein weiterer Vorteil ist, dass diese Anordnung ein gutes Dichtungsverhalten bei Überdruck in der Flasche gegenüber Umgebungsdruck aufweist.

Vorteilhaft ist ferner, dass sich diese Saugnippeleinheit und insbesondere das Belüftungsventil einfach reinigen lässt, wobei häufiges Reinigen die Funktionsbereitschaft des Belüftungsventils nicht wesentlich beeinträchtigt. Die Herstellung der Saugnippeleinheit ist relativ einfach.

In einer bevorzugten Ausführungsform bilden die zwei Befestigungsteile einen Belüftungskanal, welcher in einer nach aussen führenden Belüftungsöffnung mündet. Vorzugsweise verläuft dieser Belüftungskanal labyrinthartig zwischen den zwei Befestigungsteilen, so dass allenfalls durch die Ventilöffnung aus dem Behälter austretende Flüssigkeit im Labyrinth gefangen ist und nicht nach aussen treten kann.

In einer bevorzugten Ausführungsform sind die zwei Befestigungsteile mindestens im Bereich des Belüftungsventils starr ausgebildet, wobei sie miteinander verbindbar ausgebildet sind.

Vorzugsweise ist der Saugnippel beabstandet zum Belüftungsventil angeordnet, so dass er keinen Einfluss auf die Funktionsweise des Belüftungsventils ausüben kann. Vorzugsweise weist er einen radial nach innen oder aussen vorstehenden Flansch auf, welcher zwischen dem ersten und zweiten Basisteil gehalten ist.

In einer bevorzugten Ausführungsform weist die Membran eine Luftdurchlassöffnung auf, welche permanent offen ist, wobei sie mittels des zweiten Befestigungsteils verschliessbar ist. Die Membran weist somit vorzugsweise keinen Schlitz auf sondern eine freie Öffnung. Diese freie Öffnung ist vorzugsweise kreisrund, elliptisch, oval oder ringförmig ausgebildet. Die freie Öffnung gewährleistet, dass das Ventil auch bei kleinen Druckunterschieden zuverlässig öffnet. Eine weitere Verbesserung wird erzielt, wenn die Luftdurchlassöffnung an ihrem Umfang verstärkt ausgebildet ist. Ebenfalls als vorteilhaft in diesem Zusammenhang hat sich erwiesen, wenn die Membran eine plane Grundfläche und einen in der Grundfläche angeordneten Trichter oder Kegelstumpf aufweist, wobei die Luftdurchlassöffnung im Trichter bzw. im Kegelstumpf angeordnet ist. Vorzugsweise ist die Membran entlang ihres gesamten Umfangs bzw. ihrer Peripherie im ersten Befestigungsteil befestigt.

In einer bevorzugten Ausführungsform weist das erste Befestigungsteil einen umlaufenden Dichtring auf zur dichtenden Auflage auf einer stirnseitigen Fläche des Flüssigkeitsbehälters. Vorzugsweise sind dabei die Membran und der Dichtring gemeinsam einstückig ausgebildet. Dies erleichtert die Herstellung und gewährleistet eine optimale Dichtung.

In einer bevorzugten Ausführungsform ist das erste Befestigungsteil ein Basisteil und das zweite Befestigungsteil ein Aufnahmekopf, wobei der Saugnippel einen Flansch aufweist, welcher zwischen Aufnahmekopf und Basisteil gehalten ist, wobei der Aufnahmekopf und das Basisteil über eine lösbare Steckverbindung miteinander verbindbar sind, wobei der Aufnahmekopf hierfür Steckelemente aufweist, welche in das Basisteil einsteckbar sind und welche zur Befestigung des zusammengesteckten Basisteils und Aufnahmekopfes auf dem Flüssigkeitsbehälter ausgebildet sind. Vorzugsweise ist das Belüftungsventil im Bereich einer derartigen Steckverbindung angeordnet, so dass das als Verschluss der Membran dienende zweite Befestigungsteil optimal auf die Membran gepresst wird.

Vorzugsweise weist das erste Befestigungsteil einen ringförmigen Grundkörper und einen im Grundkörper angeformten Kegelstumpf auf, wobei ein Flüssigkeitsdurchlasskanal entlang einer Längsmittelachse des Kegelstumpfs verläuft und wobei die Membran des Belüftungsventils in der Mantelfläche des Kegelstumpfs angeordnet ist. Vorzugsweise fluchtet die Membran des Belüftungsventils im Wesentlichen mit der Mantelfläche des Kegelstumpfs.

Weitere Ausführungsformen sind in den abhängigen Ansprüchen angegeben. Beliebige Kombinationen der obigen Ausführungsformen und Varianten sind möglich.

### KURZE BESCHREIBUNG DER ZEICHNUNGEN

Eine bevorzugte Ausführungsform der Erfindung wird im Folgenden anhand der Zeichnungen beschrieben, die lediglich zur Erläuterung dienen und nicht einschränkend auszulegen sind. In den Zeichnungen zeigen:
- Figur 1: eine Explosionsdarstellung einer erfindungsgemässen Saugnippeleinheit mit einem Flüssigkeitsbehälter und Deckel;
- Figur 2: die Saugnippeleinheit gemäss Figur 1 im zusammengesteckten Zustand;
- Figur 3: einen Längsschnitt durch die Saugnippeleinheit gemäss Figur 2;
- Figur 4: eine perspektivische Darstellung eines Basisteils gemäss Figur 1;
- Figur 5: einen Längsschnitt durch das Basisteil gemäss Figur 4;
- Figur 6: eine Ansicht des Basisteils von unten;
- Figur 7: eine Seitenansicht des mit dem Aufnahmekopf zusammengesteckten Basisteils;
- Figur 8: einen Längsschnitt durch den Aufnahmekopf und das Basisteil gemäss Figur 7;
- Figur 9: eine vergrösserte Darstellung gemäss Figur 8 mit geschlossenem Belüftungsventil;
- Figur 10: die Darstellung gemäss Figur 9 mit geöffnetem Belüftungsventil;
- Figur 11: eine perspektivische Darstellung des Aufnahmekopfes von unten und
- Figur 12: einen Längsschnitt durch den Aufnahmekopf gemäss Figur 11.

### BESCHREIBUNG BEVORZUGTER AUSFÜHRUNGSFORMEN

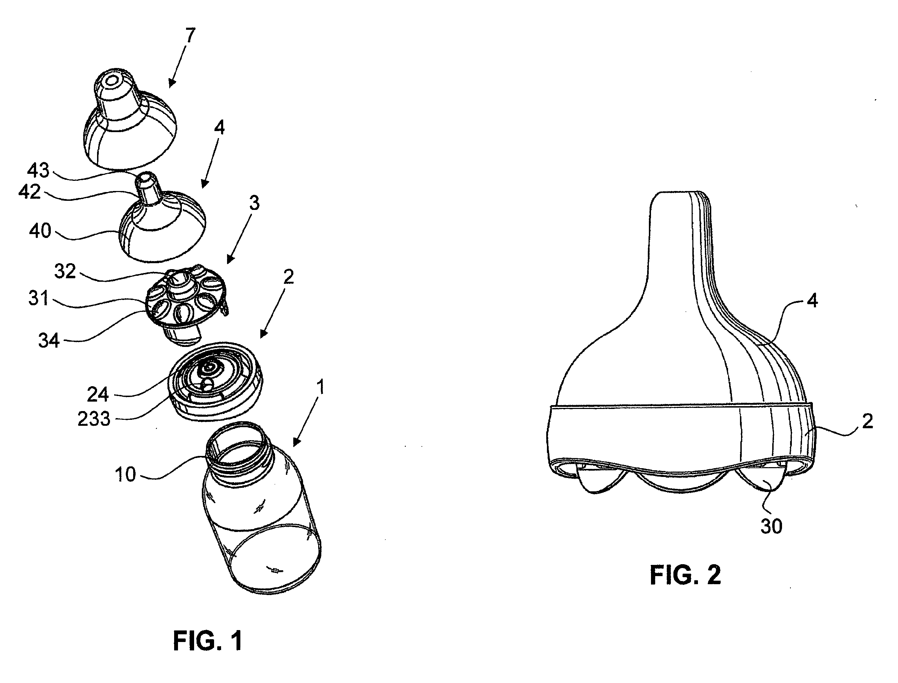

In Figur 1 ist ein Ausführungsbeispiel einer erfindungsgemässen Saugnippeleinheit 2, 3, 4 mit einem Flüssigkeitsbehälter, hier einer Milchflasche 1, und einem Deckel 7 dargestellt. Der Flüssigkeitsbehälter ist starr ausgebildet. Er lässt sich somit von Hand oder durch den Saugvorgang nicht zusammendrücken.

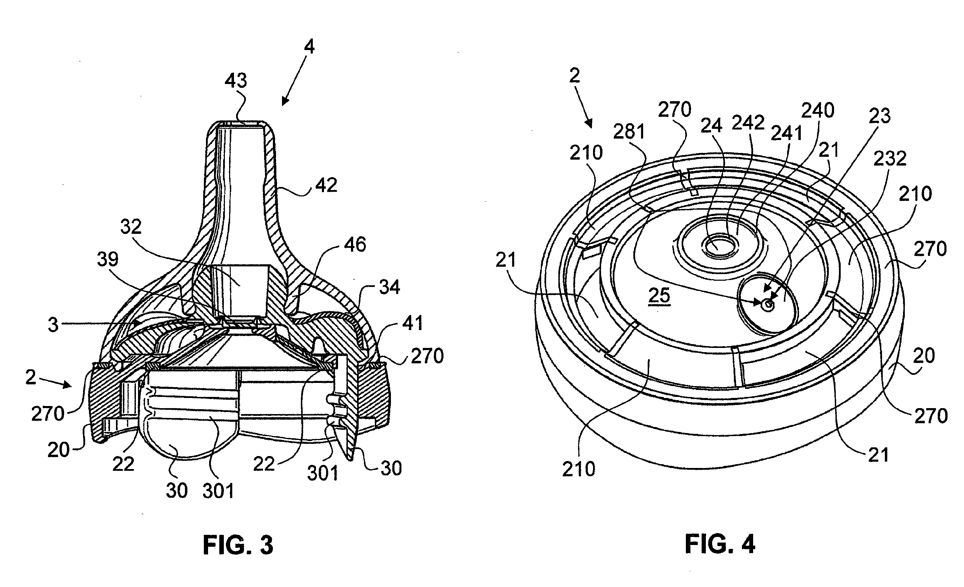

Die Saugnippeleinheit besteht aus einem Basisring 2, einem Aufnahmekopf 3 und einem Saugnippel 4. Der Saugnippel 4 ist in bekannter Weise aus einem relativ weichen Material, beispielsweise Silikon oder Kautschuk gefertigt. Er weist einen Grundkörper 40 mit einem in Figur 3 erkennbaren, nach innen gerichteten umlaufenden Flansch 41 auf. Der Grundkörper 40 ist vorzugsweise kalottenförmig oder kegelstumpfförmig ausgebildet. Der Grundkörper 40 verjüngt sich zu einem Mundstück 42, welches an seinem freien Ende eine Saugöffnung 43 aufweist. Durch diese Saugöffnung 43 kann ein Säugling Flüssigkeit aus der Flasche 1 saugen.

Der Basisring 2 und der Aufnahmekopf 3 dienen der Befestigung des Saugnippels 4 auf der Flasche 1. Sie sind vorzugsweise aus einem härteren Kunststoffmaterial gefertigt, beispielsweise aus Polypropylen (PP) oder einem Polyamid. Einzelne Bereiche dieser Befestigungsteile können, wie nachfolgend erläutert wird, aus einem weicheren Material, beispielsweise aus Silikon, Kautschuk oder TPE bestehen.

Der Aufnahmekopf 3 weist einen Grundkörper 31 auf, welcher zum Saugnippel 4 hin eine rohr- oder kegelstumpfförmige Erhöhung 35 aufweist. Im freien Ende der Erhöhung 35 befindet sich eine Durchgangsöffnung 32. Auf dem Grundkörper 31 sind vorzugsweise Stützstrukturen 34 vorhanden, welche hier kissenförmig ausgebildet sind. Sie können auch andere Formen aufweisen. Vorzugsweise sind sie aus einem weicheren Material als der Grundkörper 31 gefertigt, wobei sie gemeinsam mit ihm im Zwei- oder Mehrkomponentenspritzgussverfahren herstellbar sind. Beispielsweise besteht der Grundkörper 31 aus PP oder einem Polyamid und die Stützstrukturen 34 aus Silikon, Kautschuk oder TPE.

Der Saugnippel 4 lässt sich mit seinem Flansch 41 über den Rand 320 des Grundkörpers 31 stülpen. Die Erhöhung 35 ragt in den Bereich des Mundstücks 42 hinein und die Durchgangsöffnung 32 bildet die Verbindung zwischen Flasche 1 und Saugöffnung 43. Die Stützstrukturen 34 stützen den Grundkörper 40 des Saugnippels 4 und/oder den Übergangsbereich zwischen dem Grundkörper 40 und dem Mundstück 42 ab. Weist der Saugnippel 4, wie dies in Figur 3 erkennbar ist, eine innere, dem Mundstück 42 angeformte Schürze 46 auf, so kann diese dichtend an der Erhöhung 35 anliegen bzw. mit dieser in Eingriff gebracht werden.

Am Grundkörper 31 sind ferner Steckelemente 30 angeformt. Diese stehen dem Grundkörper 31 in Form von nach unten ragenden Beinen vor. In diesem Beispiel sind drei Steckelelemente 30 vorhanden. Es können jedoch mehr oder nur zwei bzw. nur ein einziges Steckelement vorhanden sein. Die Innenseiten der Steckelemente 30 bilden ein gemeinsames Innengewinde 301.

Das Basisteil 2 weist einen ringförmigen Grundkörper 20 auf. Der mittlere, innere Bereich des Basisteils 2 wird durch einen Trichter oder Kegelstumpf 25 gebildet, in dessen freien Ende eine Durchgangsöffnung 24 vorhanden ist. Diese bildet die Verbindung zwischen Saugöffnung 43 und Durchgangsöffnung 32 des Aufnahmekopfes 3 zur Öffnung der Flasche 1. Diese Öffnungen 43, 32, 24 sind vorzugsweise alle in der Längsmittelachse der Vorrichtung verlaufend angeordnet und fluchten entlang dieser Achse miteinander.

Der Ringkörper 20 weist eine Öffnung 233 für die Aufnahme eines erfindungsgemässen Belüftungsventils auf. Dieses wird weiter unten im Text beschrieben.

Im Ringkörper 20 sind Schlitze 21 vorhanden, in welche die Einsteckelemente 30 des Aufnahmekopfes einsteckbar sind. Der Ringkörper 20 lässt sich auf einen Gewindehals 10 der Flasche 1 aufbringen, wobei das Innengewinde der Einsteckelemente 30 mit dem Gewindehals 10 in Eingriff gebracht wird. Dadurch lassen sich Basisring 2 und Aufnahmekopf 3 auf der Flasche 1 befestigen. Beim Festschrauben werden Basisring 2 und Aufnahmekopf 3 gegeneinander verspannt. Umgibt nun der Saugnippel 4 mit seinem Flansch den Rand 320 des Aufnahmekopfes bzw. ist der Saugnippel 4 auf andere Weise zwischen Aufnahmekopf 3 und Basisring 2 gehalten, so kann er dichtend in dieser Lage zwischen den zwei Befestigungsteilen festgeklemmt werden. Der Saugnippel 4 lässt sich bei bereits zusammengesteckten Befestigungsteilen 2, 3, jedoch vor dem Festschrauben auf der Flasche 1, aufbringen, oder er lässt sich zuerst auf den Aufnahmekopf 3 aufbringen und dieser wird erst nachträglich mit dem Basisteil 2 verbunden.

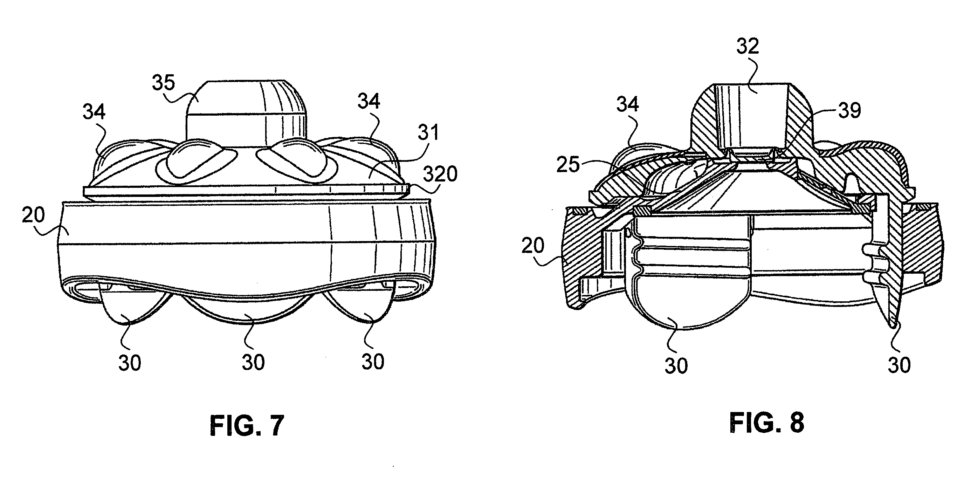

Ein zusammengesteckter Zustand von Basisteil 2 und Aufnahmekopf 3 ist in Figur 7 dargestellt. Figur 2 zeigt den zusammengesteckten Zustand der Saugnippeleinheit mit Saugnippel 4, Basisteil 2 und Aufnahmekopf 3.

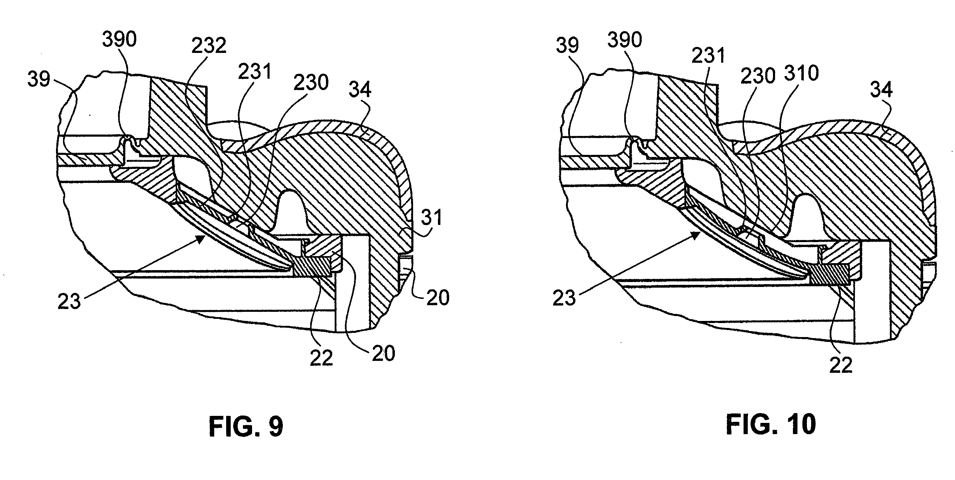

Figur 3 zeigt einen Längsschnitt durch diese zusammengesteckte Saugnippeleinheit gemäss Figur 2. Vorzugsweise, aber nicht zwingend, ist in der Erhöhung 35 ein Rückschlagventil 39 vorhanden, welches die Durchgangsöffnung 24 im Kegelstumpf 25 verschliesst. Die zugehörige Ventilöffnung 390 ist in den Figuren 9 und 10 erkennbar.

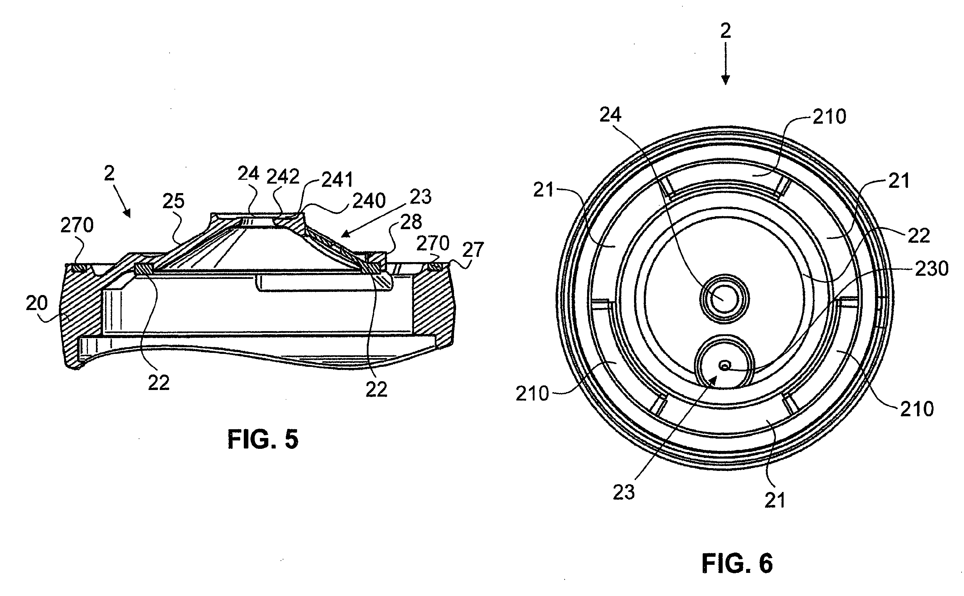

Durch diese Ventilöffnung fliesst die Flüssigkeit in das Mundstück 42 zur Saugöffnung 43. Das Rückschlagventil 39 sowie die Stützstrukturen 34 sind vorzugsweise aus einem der oben genanten weichen Materialien im Mehrkomponentenspritzgussverfahren gemeinsam mit dem härteren Grundkörper 31 des Aufnahmekopfes 3 hergestellt. Die Membran des Rückschlagventils 39 liegt auf der in Figur 5 erkennbaren zweiten oberen Dichtkante 242 des Basisteils 2 auf. Eine diese zweite obere Dichtkante 242 umlaufende erste obere Dichtkante 240 dichtet den Bereich der Ventilöffnung 390 nach aussen ab. Im Bereich der Ventilöffnung 390 und zwischen den zwei oberen Dichtkanten 240, 242 weist das Basisteil 2 eine umlaufende plane Fläche 241 auf.

Auch das Basisteil 2 weist weiche und harte Bereiche auf, welche vorzugsweise aus den oben genannten Materialien im gemeinsamen Mehrkomponentenspritzgussverfahren hergestellt sind. So ist ein umlaufender oberer Dichtring 270 vorhanden, auf welchen der Flansch 41 des Saugnippels 4 aufliegt.

Wie in Figur 3 ferner erkennbar ist, weist das Basisteil vorzugsweise einen umlaufenden unteren Dichtring 22 auf. Dieser ist am Fuss des Kegelstumpfes 25 angeordnet und besteht ebenfalls vorzugsweise aus einem der oben genannten weichen Materialien. Er liegt auf dem stirnseitigen oberen Rand des Flaschenhalses 10 auf und dichtet den äusseren Bereich des Basisteils 2, d.h. den Ringkörper 20, gegenüber der Flasche 1 ab.

Das Basisteil 2 ist in den Figuren 4 bis 6 detailliert erkennbar. Es weist in diesem Beispiel drei Schlitze 21 auf, welche sich gleichabständig entlang des kreisförmigen Umfangs erstrecken und entsprechend gebogen ausgebildet sind. Die Schlitze 21 sind von dazwischen angeordneten Stegen 210 gefolgt. Der umlaufende äussere Rand des Ringkörpers 20 weist eine äussere Dichtkante 27 auf, welcher der bereits genannte obere Dichtring 270 folgt. Auf der inneren Seite der Schlitze 21 folgt eine innere Dichtkante 28, an welche der Kegelstumpf 25 angrenzt. Die innere Dichtkante 28 ist bis auf eine oder mehrere Belüftungsöffnungen 281 vollständig umlaufend ausgebildet. Der obere Dichtring 270 weist zwischen den Stegen 210 und Schlitzen 21 Finger auf, welche sich über die innere Dichtkante 28 erstrecken. Die mindestens eine, vorzugsweise genau eine Belüftungsöffnung 281 verbindet den Kegelstumpf 25 mit einem Steg 210 oder mit einem Schlitz 21. Hier erfolgt die Verbindung über einen Steg.

Erfindungsgemäss ist das Basisteil 2 mit einem ersten Teil eines Belüftungsventils versehen. Dieses erste Teil ist in dieser Ausführungsform durch eine Membran 23 gebildet. Das zweite Teil des Ventils wird durch eine später beschriebene Ventilverschlussfläche 310 gebildet. Das Ventil öffnet und verschliesst eine Belüftungsöffnung zwischen den zwei Befestigungsteilen, d.h. in diesem Beispiel dem Basisteil 2 und dem Aufnahmekopf 3. Das Belüftungsventil ist beabstandet vom Saugnippel 4 angeordnet, welcher keinen Einfluss auf das Belüftungsventil ausübt.

In diesem Beispiel ist das Belüftungsventil, genauer seine Membran 23, in einer Mantelfläche des Kegelstumpfs 25 angeordnet. Seine Membran 23 weist vorzugsweise eine kreisrunde Form auf. Sie kann aber auch eine andere Form aufweisen, beispielsweise kann sie ringförmig, oval oder elliptisch sein. Die Membran 23 weist eine annähernd plane Grundfläche 232 auf, welche vorzugsweise mit der Mantelfläche des Kegelstumpfes 25 fluchtet oder parallel zu ihr verläuft. In dieser Grundfläche 232 ist eine Luftdurchlassöffnung 230 vorhanden. Diese Luftdurchlassöffnung 230 ist vorzugsweise permanent offen, d.h. sie ist durch eine Materialaussparung entstanden. Bevorzugte Querschnittsflächen der Öffnung betragen 0.2 - 1 mm. Vorzugsweise befindet sich diese Luftdurchlassöffnung 230 in einer über die Grundfläche 232 sich erhebende Erhöhung, hier in einem Kegelstumpf 231. Der Kegelstumpf 231 weist vorzugsweise eine im Vergleich zur Grundfläche 232 grössere Wandstärke auf, so dass die Wand der Luftdurchlassöffnung 230 verstärkt ausgebildet ist. Vorzugsweise befindet sich die Luftdurchlassöffnung 230 in der Spitze der Erhöhung. Vorzugsweise befindet sie sich in der Mitte der Grundfläche 232. Sie kann jedoch auch azentrisch angeordnet sein. Vorzugsweise ist das Belüftungsventil im Bereich eines Schlitzes 21 angeordnet.
Wie in Figur 6 erkennbar ist, ist die Membran 23 des Belüftungsventils vorzugsweise mit dem unteren Dichtring 22 verbunden.

In Figur 4 ist der Weg erkennbar, durch welche Luft von aussen in die Flasche 1 gelangen kann. Der Weg der Luft ist in der Figur mit Pfeilen dargestellt. Der Hohlraum zwischen Basisteil 2 und Aufnahmekopf 3 bildet somit einen Belüftungskanal. Die Gewindeverbindung zwischen Aufnahmekopf 3 und Flasche 1 ist nicht vollständig dicht ausgebildet, so dass Luft über den Schlitz von aussen zu den oberen Flächen der Stege 210 des Basisteils 2 gelangen kann. Hier gelangt die Luft durch die mindestens eine Belüftungsöffnung 281 in der äusseren Dichtkante 28 zur Oberfläche des Kegelstumpfes 25. Sie gleitet über diese Oberfläche bis zum Belüftungsventil und gelangt bei geöffnetem Belüftungsventil in die Flasche 1.

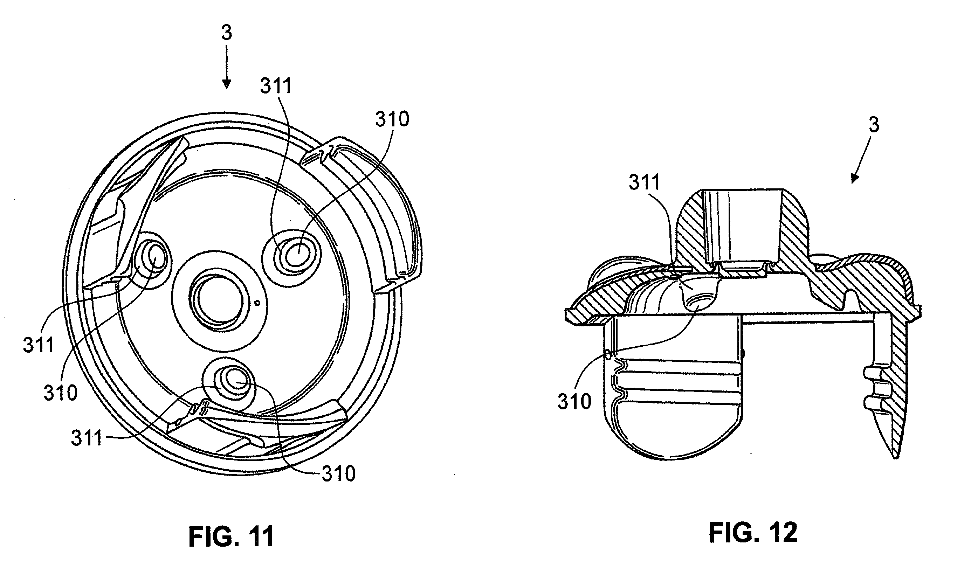

In Figur 8 und in vergrösserter Darstellung in den Figuren 9 und 10 ist das Belüftungsventil in geschlossener und geöffneter Stellung dargestellt. Der Aufnahmekopf 3 weist auf seiner Unterseite eine plane Ventilverschlussfläche 310 auf. Diese Verschlussfläche 310 ist in den Figuren 11 und 12 gut sichtbar. Der Grundkörper 31 weist hierzu mindestens einen, vorzugsweise mehrere nach unten vorstehende Verschlusskörper 311 auf, deren freie Enden durch die planen Verschlussflächen 310 gebildet sind. Die Verschlussflächen 310 weisen vorzugsweise dieselbe Neigung auf wie die Mantelfläche des Kegelstumpfes 25. Vorzugsweise sind gleich viele Verschlusskörper 311 vorhanden wie es Drehpositionen zum Zusammenstecken von Basisteil 2 und Aufnahmekopf 3 gibt. In diesem Beispiel gibt es drei Schlitze 21, somit drei Drehpositionen des Aufnahmekopfes 3 relativ zum Basisteil 2 und somit auch drei Verschlusskörper 311.

Wie in Figur 9 sichtbar ist, drückt einer der drei Verschlusskörper 310 auf den Kegelstumpf 231 des Belüftungsventils bzw. die Verschlussfläche 310 liegt auf der Membran 23 auf und verschliesst die Luftdurchlassöffnung 230. Da der Kegelstumpf 231 eine kleine Auflagefläche bildet, ist der Flächendruck erhöht und eine optimale Dichtung gewährleistet. Die Dichtheit lässt sich noch erhöhen, wenn der obere Rand des Kegelstumpfes 231, wie hier dargestellt, spitzig ausgebildet ist.

Wird nun über die Saugöffnung 43 Flüssigkeit aus der Flasche 1 gesogen, reduziert sich der Druck in der Flasche 1 und das Belüftungsventil wird geöffnet. Luft gelangt von aussen in die Flasche 1. Sollte Flüssigkeit aus dem Belüftungsventil austreten, so verhindert der lange, in Figur 4 gezeigte labyrinthartige Weg, dass Flüssigkeit nach aussen gelangen kann. Sie bleibt vorzugsweise an den Mantelflächen des Trichters oder Kegelstumpfes 25 liegen. Bei der Reinigung der Saugnippeleinheit lässt sich die dort liegen gebliebene Flüssigkeit einfach wieder entfernen, da bei auseinander genommener Saugnippeleinheit diese Mantelflächen des Kegelstumpfes 25 frei liegen und für die Reinigung optimal zugänglich sind.

Das erfindungsgemässe Belüftungsventil in seiner speziellen Ausbildung und Anordnung lässt sich jedoch auch in anders ausgebildeten Saugnippeleinheiten einsetzen. Wesentlich ist lediglich, dass ein Membranventil verwendet wird und dass dieses Ventil nicht im Saugnippel sondern in einem zwei- oder mehrteiligen Befestigungsteil zur Befestigung des Saugnippels angeordnet ist.

Beispielsweise kann die Membran des Belüftungsventils auch im Aufnahmekopf angeordnet sein und das Basisteil weist einen entsprechenden Verschluss der Luftdurchlassöffnung auf.

Die erfindungsgemässe Saugnippeleinheit funktioniert auch bei sehr geringen Druckunterschieden von z.B. 30 mmHg zwischen Flasche und Umgebung sehr zuverlässig. Des Weiteren ist die Funktionsbandbreite der verschiedenen Saugnippeleinheiten des gleichen Typs relativ schmal, so dass verschiedene Saugnippeleinheiten sehr ähnlich funktionieren und die Belüftungsventile bei ähnlichen Druckunterschieden betätigt werden.

### BEZUGSZEICHENLISTE

| | | | |
|---|---|---|---|
| 1 | Behälter | | |
| 10 | Gewindehals | 3 | Aufnahmekopf |
| | | 30 | Steckelement |
| 2 | Basisteil | 301 | Innengewinde |
| 20 | Ringkörper | 31 | Grundkörper |
| 21 | Schlitz | 310 | Ventilverschlussfläche |
| 210 | Steg | 311 | Verschlusskörper |
| 22 | unteren Dichtring | 320 | Rand |
| 23 | Membran des Belüftungsventils | 32 | Durchgangsöffnung |
| 230 | Luftdurchlassöffnung | 34 | Stützstruktur |
| 231 | Kegelstumpf | 35 | Erhöhung |
| 232 | Grundfläche | 39 | Rückschlagventil |
| 233 | Aufnahmeöffnung für das Ventil | 390 | Ventilöffnung |
| 24 | Durchgangsöffnung | | |
| 240 | erste obere Dichtkante | 4 | Saugnippel |
| 241 | plane Fläche | 40 | Grundkörper |
| 242 | zweite obere Dichtkante | 41 | Flansch |
| 25 | Kegelstumpf | 42 | Mundstück |
| 27 | äussere Dichtkante | 43 | Saugöffnung |
| 270 | oberer Dichtring | 46 | Schürze |
| 28 | innere Dichtkante | | |
| 281 | Belüftungsöffnung | 7 | Deckel |

## Patentansprüche

1. Saugnippeleinheit mit einem Saugnippel (4), mit einer Befestigungsvorrichtung (2, 3) zur Befestigung des Saugnippels (4) auf einem Flüssigkeitsbehälter (1) und mit einem Belüftungsventil (23, 310), wobei die Befestigungsvorrichtung ein erstes und ein zweites Befestigungsteil (2, 3) aufweist, und wobei das Belüftungsventil (23, 310) mindestens ein erstes und ein zweites Ventilteil (23, 310) umfasst, **dadurch gekennzeichnet, dass**
a) das erste Ventilteil (23) im ersten Befestigungsteil (2) angeordnet ist und das zweite Ventilteil (310) im zweiten Befestigungsteil (3) oder
b) sich das Belüftungsventil (23, 310) gegenüber dem zweiten Befestigungsteil (3) öffnet oder verschliesst und das erste Ventilteil (23) und das zweite Ventilteil (310) im ersten Befestigungsteil (2) angeordnet sind.

2. Saugnippeleinheit nach Anspruch 1, wobei der Saugnippel (4) dichtend zwischen den zwei Befestigungsteilen (2, 3) festklemmbar ist.

3. Saugnippeleinheit nach einem der Ansprüche 1 oder 2, wobei das Belüftungsventil (23, 310) ein Membranventil und das erste Teil eine Ventilmembran (23) ist.

4. Saugnippeleinheit nach einem der Ansprüche 1 bis 3, wobei die zwei Befestigungsteile (2, 3) mindestens im Bereich des Belüftungsventils (23, 310) starr ausgebildet sind und wobei sie miteinander verbindbar ausgebildet sind.

5. Saugnippeleinheit nach einem der Ansprüche 1 bis 4, wobei der Saugnippel (4) unabhängig vom Belüftungsventil (23, 310) angeordnet ist.

6. Saugnippeleinheit nach einem der Ansprüche 1 bis 5, wobei die zwei Befestigungsteile (2, 3) einen Belüftungskanal bilden, welcher in mindestens einer nach aussen führenden Belüftungsöffnung (281) mündet.

7. Saugnippeleinheit nach einem der Ansprüche 1 bis 6, wobei die Membran eine Luftdurchlassöffnung (230) aufweist, welche permanent offen ausgebildet ist und welche mittels des zweiten Befestigungsteils (2) verschliessbar ist.

8. Saugnippeleinheit nach Anspruch 7, wobei die Luftdurchlassöffnung (230) an ihrem Umfang verstärkt ausgebildet ist.

9. Saugnippeleinheit nach einem der Ansprüche 7 oder 8, wobei die Luftdurchlassöffnung (230) kreisrund, elliptisch, oval oder ringförmig ausgebildet ist.

10. Saugnippeleinheit nach einem der Ansprüche 7 bis 9, wobei die Membran eine plane Grundfläche (232) und einen in der Grundfläche (232) angeordneten Kegelstumpf (231) aufweist, wobei die Luftdurchlassöffnung (230) im Kegelstumpf (231) angeordnet ist.

11. Saugnippeleinheit nach einem der Ansprüche 1 bis 10, wobei die Membran entlang ihrer gesamten Peripherie im ersten Befestigungsteil (2) befestigt ist.

12. Saugnippeleinheit nach einem der Ansprüche 1 bis 11, wobei das erste Befestigungsteil (2) einen umlaufenden Dichtring (22) aufweist zur dichtenden Auflage auf einer stirnseitigen Fläche des Flüssigkeitsbehälters (1), wobei die Membran und der Dichtring (22) vorzugsweise gemeinsam einstückig ausgebildet sind.

13. Saugnippeleinheit nach einem der Ansprüche 1 bis 12, wobei das erste Befestigungsteil ein Basisteil (2) und das zweite Befestigungsteil ein Aufnahmekopf (3) ist, wobei der Aufnahmekopf (3) und das Basisteil (2) über eine lösbare Steckverbindung (21, 30) miteinander verbindbar sind, wobei der Aufnahmekopf (3) hierfür Steckelemente (30) aufweist, welche in das Basisteil (2) einsteckbar sind und welche zur Befestigung des zusammengesteckten Basisteils (2) und Aufnahmekopfes (3) auf dem Flüssigkeitsbehälter (1) ausgebildet sind.

14. Saugnippeleinheit nach einem der Ansprüche 1 bis 13, wobei das erste Befestigungsteil (2) einen ringförmigen Grundkörper (20) und einen im Grundkörper (20) angeformten Kegelstumpf (25) aufweist, wobei ein Flüssigkeitsdurchlasskanal entlang einer Längsmittelachse des Kegelstumpfs (25) verläuft und wobei die Membran des Belüftungsventils (23, 310) in einer Mantelfläche des Kegelstumpfs (25) angeordnet ist.

15. Saugnippeleinheit nach Anspruch 14, wobei die Membran des Belüftungsventils (23, 310) im Wesentlichen mit der Mantelfläche des Kegelstumpfs (25) fluchtet.

## Claims

1. Teat unit with a teat (4), a securing device (2, 3) for securing the teat (4) on a liquid container (1), and an air valve (23, 310), the securing device having a first securing part (2) and a second securing part (3), and the air valve (23, 310) having at least a first valve part (23) and a second valve part (310), **characterized in that**
a) the first valve part (23) is arranged in the first securing part (2), and the second valve part (310) is arranged in the second securing part (3) or
b) the air valve (23, 310) opens or closes with respect to the second securing part (3) and the first valve part (23) and the second valve part (310) are arranged in the first securing part (2).

2. Teat unit according to Claim 1, wherein the teat (4) can be clamped sealingly between the two securing parts (2, 3).

3. Teat unit according to one of Claims 1 and 2, wherein the air valve (23, 310) is a diaphragm valve, and the first part is a valve diaphragm (23).

4. Teat unit according to one of Claims 1 to 3, wherein the two securing parts (2, 3) are rigid, at least in the area of the air valve (23, 310), and wherein they are designed such that they can be connected to each other.

5. Teat unit according to one of Claims 1 to 4, wherein the teat (4) is arranged independently of the air valve (23, 310).

6. Teat unit according to one of Claims 1 to 5, wherein the two securing parts (2, 3) form an air channel that opens into at least one air opening (281) leading to the outside.

7. Teat unit according to one of Claims 1 to 6, wherein the diaphragm has an air through-flow opening (230) that is designed permanently open and that can be closed by means of the second securing part (2).

8. Teat unit according to Claim 7, wherein the air through-flow opening (230) is strengthened at its circumference.

9. Teat unit according to one of Claims 7 or 8, wherein the air through-flow opening (230) is circular, elliptic, oval or annular.

10. Teat unit according to one of Claims 7 to 9, wherein the diaphragm comprises a plane main surface (232) and a truncated cone (231) arranged in the main surface (232), the air through-flow opening (230) being arranged in the truncated cone (231).

11. Teat unit according to one of Claims 1 to 10, wherein the diaphragm is secured about its entire periphery in the first securing part (2).

12. Teat unit according to Claim 11, wherein the first securing part (2) comprises a circumferential sealing ring (22) for bearing in a leaktight manner on an end face of the liquid container (1), the diaphragm and the sealing ring (22) being designed together in one piece.

13. Teat unit according to one of Claims 1 to 12, wherein the first securing part is a base part (2) and the second securing part is a receiving head (3), wherein the receiving head (3) and the base part (2) can be connected to each other via a releasable plug connection (21, 30), wherein the receiving head (3) for this purpose comprises plug elements (30) that can be plugged into the base part (2) and that are designed to secure the assembled base part (2) and receiving head (3) on the liquid container (1).

14. Teat unit according to one of Claims 1 to 13, wherein the first securing part (2) comprises an annular main body (20) and a truncated cone (25) formed integrally in the main body (20), wherein a liquid through-flow channel extends along a longitudinal centre axis of the truncated cone (25), and wherein the diaphragm of the air valve (23, 310) is arranged in a circumferential surface of the truncated cone (25).

15. Teat unit according to Claim 14, wherein the diaphragm of the air valve (23, 310) is substantially flush with the circumferential surface of the truncated cone (25).

## Revendications

1. Unité téterelle avec une téterelle (4), un dispositif de fixation (2, 3) pour fixer la téterelle (4) sur un récipient de liquide (1), et une soupape d'air (23, 310), le dispositif de fixation ayant une première pièce de fixation (2) et une seconde pièce de fixation (3), et la soupape d'air (23, 310) ayant au moins une première pièce de soupape (23) et une deuxième pièce de soupape (310), **caractérisé en ce que**
a) la première pièce de soupape (23) est arrangée dans la première pièce de fixation (2), et la deuxième pièce de soupape (310) est arrangée dans la deuxième pièce de fixation (3) ou
b) la soupape d'air (23, 310) s'ouvre ou se ferme par rapport à la deuxième pièce de fixation (3) et la première pièce de soupape (23) et la deuxième pièce de soupape (310) sont arrangées dans la première pièce de fixation (2).

2. Unité téterelle selon la revendication 1, où la téterelle (4) peut être serré de manière étanche entre les deux pièces de fixation (2, 3).

3. Unité téterelle selon l'une quelconque des revendications 1 ou 2, où la soupape d'air (23, 310) est une soupape à membrane, et la première pièce est une membrane de soupape (23).

4. Unité téterelle selon l'une quelconque des revendications 1 à 3, où les deux pièces de fixation (2, 3) sont rigide, au moins dans la région de la soupape d'air (23, 310), et où ils sont formées de telle sorte qu'ils peuvent être connectées l'une à l'autre.

5. Unité téterelle selon l'une quelconque des revendications 1 à 4, où la téterelle (4) est arrangée de manière indépendante de la soupape d'air (23, 310).

6. Unité téterelle selon l'une quelconque des revendications 1 à 5, où les deux pièces de fixation (2,3) forment un canal d'air qui débouche dans au moins une ouverture d'air (281) conduisant à l'extérieur.

7. Unité téterelle selon l'une quelconque des revendications 1 à 6, où la membrane a une ouverture de sortie d'air (230) qui est conçue ouvert de manière permanente et qui peut être fermée par moyen de la deuxième pièce de fixation (2).

8. Unité téterelle selon la revendication 7, où l'ouverture de sortie d'air (230) est renforcée à sa périphérie.

9. Unité téterelle selon l'une quelconque des revendications 7 ou 8, où l'ouverture de sortie d'air (230) est circulaire, elliptique, ovale ou annulaire.

10. Unité téterelle selon l'une quelconque des revendications 7 à 9, où la membrane a une surface principale plane (232) et un tronc de cône (231) disposée dans la surface principale (232), l'ouverture de sortie d'air (230) étant disposée dans le tronc de cône (231).

11. Unité téterelle selon l'une quelconque des revendications 1 à 10, où la membrane est fixée sur toute sa périphérie dans la première pièce de fixation (2).

12. Unité téterelle selon la revendication 11, où la première pièce de fixation (2) a une bague d'étanchéité circonférentielle (22) pour s'appliquer de manière étanche sur une face d'extrémité du récipient de liquide (1), la membrane et la bague d'étanchéité (22) étant conçus ensemble en une seule pièce.

13. Unité téterelle selon l'une quelconque des revendications 1 à 12, où la première pièce de fixation est une pièce de base (2) et la deuxième pièce de fixation est une tête de réception (3), où la tête de réception (3) et la pièce de base (2) peuvent être connectées l'une à l'autre par moyen de connexion détachable (21, 30), où la tête de réception (3), à cet effet, comprend des éléments d'enfichage (30) qui peut être inséré dans la pièce de base (2) et qui sont conçu pour fixer la pièce de base assemblé (2) et la tête de réception (3) sur le récipient de liquide (1).

14. Unité téterelle selon l'une quelconque des revendications 1 à 13, où la première pièce de fixation (2) comprend un corps principal annulaire (20)et un tronc de cône (25) formé intégralement dans le corps principal (20), où un canal de sortie de liquide s'étend le long d'un axe médian longitudinal du tronc de cône (25), et où la membrane de la soupape d'air (23, 310) est disposée dans une surface circonférentielle du tronc de cône (25).

15. Unité téterelle selon la revendication 14, où la membrane de la soupape d'air (23, 310) est essentiellement de niveau avec la surface circonférentielle du tronc de cône (25).
